# EUROPÄISCHE PATENTANMELDUNG

(11) **EP 1 768 048 A2**
(43) Veröffentlichungstag der Anmeldung: **28.03.2007**
(21) Anmeldenummer: 06019154.1
(22) Anmeldetag: 13.09.2006
(51) Int. Cl.: G06F 21/22

(54) **System für die Identifizierung und die Vergabe von Benutzungsberechtigungen in einer Datenverarbeitungseinrichtung**

(30) Priorität: 14.09.2005 AT 15082005
(71) Anmelder: Gallner, Leopold, 4491 Niederneukirchen (AT)
(72) Erfinder: Moser, Thomas, 4052 Ansfelden (AT); Gallner, Leopold, 4491 Niedermeukirchen (AT); Keldorfer, Signot, 4600 Weis (AT)

(57) **Zusammenfassung**

Die Erfindung betrifft ein System für die Identifizierung und die Vergabe von Benutzungsberechtigungen in einer Datenverarbeitungseinrichtung. Die steuernden Benutzer sind in der Datenverarbeitungsanlage gleichzeitig sowohl als individuelle Benutzer, als auch als Teil einer Gruppe von mehreren Benutzern registrierbar. Den Benutzern werden einerseits Programme zur Verfügung gestellt, welche auch anderen Benutzern zur Verfügung stehen, andererseits Programme, welche zumindest in der jeweiligen Einstellung, nur ihnen ganz persönlich dienen. Die Programme sind entsprechend dieser Unterscheidung in zwei Gruppen zusammengefasst und je Gruppe durch ein eigens dafür eingerichtetes Programmmodul (E1, E2) verwaltet. Jene Programme, welche individuellen Benutzern zugeordnet sind, werden automatisch bei einem Benutzerwechsel durch das verwaltende Programmmodul (E1) beendet. Jene Programme, welche einer ganzen Gruppe von Benutzern gemeinsam zugeordnet sind, werden bei einem Benutzerwechsel nicht beendet, sondern von ihrem verwaltenden Programmmodul (E2) nur informiert und ggf. in individuellen Einstellungen geändert. Bevorzugt sind dies Programme, welche mit Vorgängen außerhalb der Datenverarbeitungseinrichtung in Echtzeit interagieren.

## Beschreibung

Die Erfindung betrifft ein System für die Identifizierung und die Vergabe von Benutzungsberechtigungen in einer Datenverarbeitungseinrichtung. Es ist insbesondere dann sehr vorteilhaft anwendbar, wenn die in der Datenverarbeitungsanlage arbeitenden Programme kontinuierlich mit physischen Prozessen außerhalb der Datenverarbeitungsanlage interagieren, und deshalb nicht ohne weiteres beendet werden dürfen.

Es hat sich aus mehreren Gründen durchgesetzt, Anwendungen welche auf Datenverarbeitungsanlagen laufen, und welche durch einen bestimmten Benutzer von einem bestimmten Eingabegerät gestartet wurden und beeinflusst werden, automatisch zu beenden, wenn sich am selben Eingabegerät ein anderer Benutzer anmeldet.
Es gibt im wirtschaftlichen Alltag eine Vielzahl von Anwendungen, welche über wesentlich längere Zeiträume laufen sollen, ohne abgeschaltet zu werden, als die Arbeitsschichtdauer von einzelnen Menschen, welche die Anwendungen über ein Eingabegerät an ihrem Arbeitsplatz steuern. Damit diese Anwendungen bei Schichtwechsel der einzelnen Beschäftigten nicht automatisch abgeschaltet werden, ist es üblich, die einzelnen Mitglieder der Arbeitsgruppe, welche in mehreren Schichtengruppen diese dauerhaft laufenden Anwendungen betreut, gegenüber der Datenverarbeitungsanlage mit derselben Identität zu versehen. Konkret heißt das, dass sich z.B. alle Schichtarbeiter mit der selben Benutzerkennung anmelden.
Ein Nachteil dieser Vorgangsweise liegt darin, dass nicht mehr bis auf einzelne Personen nachvollziehbar ist, wer was steuert bzw. gesteuert hat. Ein weiterer Nachteil ist, dass einzelne Personen keine individuell nur Ihnen zugeordneten Anwendungen, wie z.B. einen persönlichen Mailordner, haben können.

Die US 5263158 beschreibt eine verteilte Datenverarbeitungseinrichtung mit Zugriffsmöglichkeiten für eine Vielzahl von Benutzern. Es können standardisierte Benutzerprofile vordefiniert werden, welchen Nutzungsrechte für bestimmte Funktionen der Datenverarbeitungsanlage, sowie eine Prioritätsreihung für den Fall von Kapazitätsengpässen zugeordnet sind. Diese standardisierten Benutzerprofile werden individuellen Benutzern, welche sich beim Einloggen mit Name und Passwort identifizieren müssen, zugeordnet.
Die Datenverarbeitungsanlage führt den angemeldeten Benutzer nur mit seiner individuellen Identität; die gleichzeitige Zuordnung einer Gruppenidentität ist nicht möglich. Das kann dann sehr störend sein, wenn der Benutzer einen personalisierten Maileingang verwenden können soll, anderseits aber als gleichberechtigter Vertreter der Mannschaft einer Arbeitsschicht Prozesse beeinflussen soll, welche die ganze Mannschaft betreffen.

Die DE 19627486 A1 beschreibt eine Datenverarbeitungsanlage auf welche Benutzer und Benutzergruppen nach entsprechendem Identifizierungsvorgang zugreifen können. Dabei sind die Benutzer einer hierarchischen Struktur von Unter- und Über-Benutzergruppen zugeordnet. Die Identitätskennung der einzelnen Benutzer beinhaltet auch Informationen, durch welche die Zuordnung innerhalb dieser Hierarchiestruktur ermöglicht wird. Die Anlage wird dazu verwendet, die Aktivitäten der einzelnen Gruppenmitglieder zwecks späterer Abrechnung nicht nur als deren individuelle Aktivitäten zu protokollieren, sondern auch als Aktivität einer Benutzergruppe, damit diese von der jeweils übergeordneten Einheit als gesamte Gruppe abgerechnet werden kann. Es ist nicht vorgesehen und auch nicht möglich, dass jedes Mitglied einer Gruppe sowohl einen gemeinsamen Gruppenprozess steuern kann, als auch individuelle Prozesse allein steuern kann. Der Anmeldevorgang für die einzelnen Gruppenmitglieder kann sehr aufwendig werden, da nicht nur die persönlichen Anmeldedaten, sondern auch die der übergeordneten Gruppen deren Mitglied man direkt oder indirekt ist, einzugeben sind.

Die US 5881225 zeigt ebenfalls eine Datenverarbeitungsanlage mit Zutrittsmöglichkeit für viele Benutzer. Der Benutzer hat sich mit Name und Passwort anzumelden, und er hat aus einer Liste von vordefinierten Möglichkeiten eine oder mehrere Rollen zu wählen in denen er an der Datenverarbeitungsanlage arbeiten will. Es wird automatisch überprüft, ob der Benutzer berechtigt ist diese Rollen einzunehmen, wenn ja, wird der Benutzer mit den entsprechenden Rechten an der Datenverarbeitungsanlage als angemeldet registriert. Wenn der so registrierte Benutzer Anwendungen beeinflussen möchte, wird durch ein Programmmodul, welches für die Sicherheitsüberwachung zuständig ist, geprüft ob der Benutzer die entsprechenden Berechtigungen hat, und entsprechend dem Prüfungsergebnis wird entweder so verfahren wie vom Benutzer angefordert, oder die Anforderung wird zurückgewiesen.
Durch die Veränderbarkeit der Rechte der einzelnen Rollen seitens der Systembetreuer, und durch die Möglichkeit in mehreren Rollen gleichzeitig angemeldet zu sein, ergibt sich eine sehr vielseitige Beeinflussbarkeit der Benutzungsbedingungen der Anlage. Nachteile dieser Organisationsform sind, dass sehr leicht unübersichtlich wird, wer welche Rechte hat, dass den einzelnen Benutzern mehr Anwendungsmöglichkeiten gezeigt und damit scheinbar angeboten werden, als dann tatsächlich für sie nutzbar sind, und dass die einzelnen Benutzer bei der Anmeldung relativ aufwendig ihre jeweiligen Rollen wählen müssen. Darüber, nach welchen Regeln Anwendungen beim Wechseln von Benutzern an einzelnen Eingabegeräten gestoppt oder fortgeführt werden, gibt die US 5881225 keine Auskunft.

Entsprechend der DE 10040213 A1 wird den einzelnen Benutzern bei der Anmeldung eine Gruppenzugehörigkeit und ein für diese Gruppe vordefiniertes Anwendungsprofil zugeordnet. Entsprechend diesem Anwendungsprofil werden auf dem jeweiligen Eingabegerät Schaltmöglichkeiten bereitgestellt. Anmeldung und Arbeit sind für den einzelnen Benutzer klar und einfach. Nach der Anmeldung besteht jedoch keine Unterscheidungsmöglichkeit mehr zwischen Gruppenidentität und individueller Identität. Dementsprechend können auch keine Anwendungsrechte diesbezüglich unterschiedlich zugeordnet werden.

Die DE 10040855 A1 beschreibt einen Ablauf zum Erlangen der Zutrittsberechtigung für einen Benutzer an einem entfernt angeordneten Einzelcomputer zu einer Datenverarbeitungsanlage. Dabei wird von einem weiteren sogenannten Zugangscomputer die Zugangsberechtigung geprüft und bei positivem Ergebnis der Einzelcomputer entsprechend gesteuert, damit er an die Datenverarbeitungsanlage die gewünschte Verbindung einschließlich Arbeitsberechtigungen herstellt. In einer vorteilhaften Ausführungsform ist der Zugangscomputer mit Mitteln ausgestattet, die Identität des Benutzers anhand der Prüfung von biometrischen Daten zu prüfen.
Die gleichzeitige Registrierung von Gruppenidentität und individueller Identität eines Benutzers ist nicht vorgesehen. Bei der beschriebenen Ausführungsform mit Prüfung von biometrischen Daten muss sich der Zugangscomputer räumlich beim anzumeldenden Benutzer befinden, womit die örtliche Flexibilität stark eingeschränkt ist.

Von diesem Stand der Technik ausgehend besteht die der Erfindung zu Grunde liegende Aufgabe darin, ein Organisationssystem für die Benutzung einer Datenverarbeitungsanlage entsprechend folgenden Vorgaben bereitzustellen:
- Einzelne Anwendungen sollen als gemeinsame Anwendungen von mehreren Benutzern betrieben werden. Andere Anwendungen sollen als individuelle Anwendungen von Einzelpersonen betrieben werden.
- Die gemeinsamen Anwendungen sollen nicht unterbrochen werden, wenn an jenen Arbeitsplatzrechnern von welchen aus diese Anwendungen gesteuert werden, die handelnden Personen wechseln, sofern diese Personen zu den berechtigten Betreibern dieser Anwendungen gehören.
- Die individuellen Anwendungen sollen beendet werden, wenn an jenen Arbeitsplatzrechnern von welchen diese Anwendungen gesteuert werden, die handelnden Personen wechseln.
- Es soll möglich sein, an den einzelnen Arbeitsplatzrechnern nur jene Anwendungen anzuzeigen, welche für den jeweiligen Benutzer bzw. die jeweilige Benutzergruppe tatsächlich anwendbar sind.
- Der Anmeldevorgang sollte für den Benutzer einfach und klar sein.

Zum Lösen der Aufgabe werden Personen am Arbeitsplatzrechner sowohl als individuelle Benutzer, als auch in Ihrer Eigenschaft als sog. Sammelbenutzer identifiziert. In ihrer Eigenschaft als Sammelbenutzer werden diesen Personen Programme zur Verfügung gestellt, welche auch anderen Personen zur Verfügung stehen. In ihrer Eigenschaft als individuelle Benutzer werden diesen Personen auch Programme, welche zumindest in der jeweiligen Einstellung, nur ihnen ganz persönlich zur Verfügung stehen, zugänglich gemacht. Die Programme werden entsprechend diesem Unterscheidungsmerkmal in zwei Gruppen zusammengefasst und je Gruppe durch ein eigens dafür eingerichtetes Programmmodul verwaltet, d.h. gestartet, beendet oder von Benutzeranmeldungen informiert. Jene Programme, welche individuellen Benutzern zugeordnet sind, werden bei einem Benutzerwechsel nach Veranlassung durch das verwaltende Programmmodul vom Betriebssystem automatisch beendet. Jene Programme, welche Sammelbenutzern gemeinsam zugeordnet sind, werden bei einem Benutzerwechsel von ihrem verwaltenden Programmmodul nur informiert und ggf. in individuellen Einstellungen geändert, nicht aber beendet.

Die Lösung wird anhand der Zeichnungen anschaulicher:

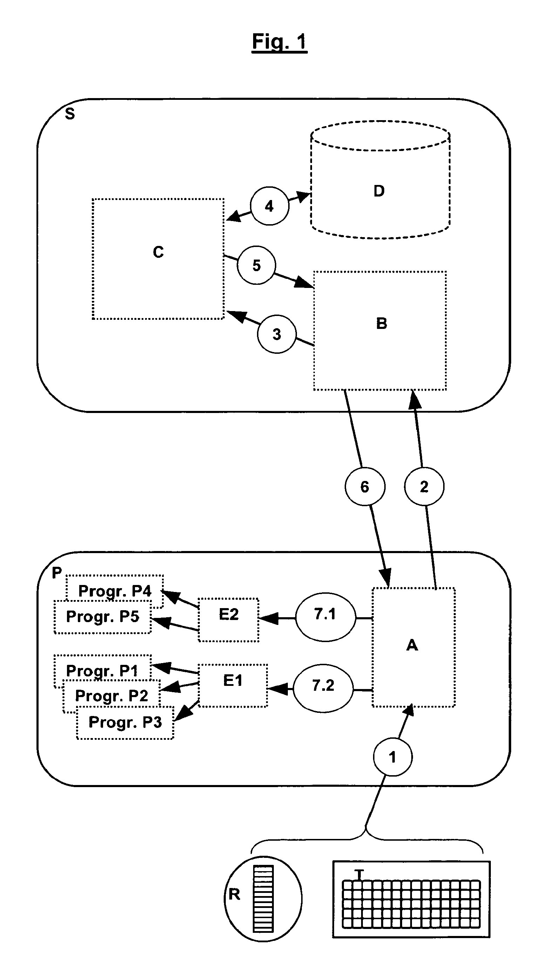

- Fig. 1:: zeigt ein Ablaufdiagramm für einen Anmeldevorgang. Stark umrandete Teile symbolisieren dabei physische Geräte. Punktiert umrandete Teile symbolisieren Programmmodule. Die mit Nummern gekennzeichneten Pfeile veranschaulichen die Abfolge des Informationsflusses.

Die durch die Benutzer am Arbeitsplatzrechner P gemäß Fig. 1 zu bedienenden Programme sind in zwei Gruppen zusammengefasst. Eine Gruppe umfasst jene Anwendungen, welche genau jeweils einem einzelnen Benutzer zugewiesen sind, und im Falle eines Benutzerwechsels automatisch geschlossen werden. Die zweite Gruppe umfasst jene Anwendungen, welche mehreren Benutzern, zusammenfassend als "Sammelbenutzer" bezeichnet, gemeinsam zugewiesen sind, und bei einem Benutzerwechsel nicht zwangsweise automatisch geschlossen werden. Je nach Gruppenzugehörigkeit werden diese Programmgruppen durch eines der beiden Programmmodule E1 oder E2 verwaltet, d.h. gestartet, einem einzelnen Benutzer oder einem Sammelbenutzer zugewiesen, oder beendet.

Von einem Ruhezustand des Arbeitsplatzrechners gemäß Fig. 1 aus geschieht ein erfolgreicher Anmeldevorgang typischerweise in folgenden Schritten:
- Durch Drücken einer Taste gelangt der Benutzer in das Anmeldemenü. Auf Aufforderung gibt er über die Tastatur T sein Sammelbenutzerkonto und über das Lesegerät R einen Fingerabdruck als biometrisches Merkmal ein.
- Das Anmeldeprogrammmodul A am Arbeitsplatzrechner P sendet diese Daten an ein weiteres, am Server S befindliches, für viele Arbeitsplatzrechner zuständiges Vergleichs-Programmmodul (B), welches des Weiteren über eine Schnittstelle (C) mit der ebenfalls am Server befindlichen Benutzerdatenbank (D) kommuniziert.
- Von der Benutzerdatenbank (D) erhält das Vergleichs-Programmmodul (B) die erforderlichen Daten, nämlich Referenzdatensätze zum' Vergleich mit dem eingelesenen Fingerabdruck, sowie - im Fall dass der Benutzer erkannt wird - Informationen über Zugehörigkeit zu einem Sammelbenutzer und Identität des Benutzers.
- Das Ergebnis dieser Erkennung wird an das Anmeldeprogrammmodul A am Arbeitsplatzrechner P mitgeteilt. Sofern der Benutzer nicht erkannt wurde, wird er erneut zur Eingabe der Eingangsinformationen aufgefordert. Sofern er erkannt wird, werden die, die einzelnen Anwendungen verwaltenden Programmmodule E1 und E2 von der Neuanmeldung informiert.
- Das Programmmodul E1, welches die personalisierten, also genau einem Benutzer zugeordneten Programme verwaltet, lässt durch das Betriebssystem alle von ihm verwalteten, bis dahin offenen Programme schließen, sofern mit der Anmeldung der Benutzer gewechselt hat.
- Das Programmmodul E2, welches die ganzen Sammelbenutzern zugeordneten Programme verwaltet, teilt einen allfälligen Benutzerwechsel an die von ihm verwalteten Programme mit. Diese Programme reagieren entsprechend ihren individuellen Voreinstellungen auf den Benutzerwechsel; beispielsweise mit Erweiterungen oder Einschränkungen von Sicht- und Eingabemöglichkeiten. Anders als die von E1 verwalteten Programme werden sie beim Wechsel eines physischen Benutzers nicht automatisch durch das verwaltende Programmmodul geschlossen.

Durch die Zuordnung am Arbeitsplatzrechner P von Programmanwendungen zu verwaltenden Programmmodulen E1 und E2, je nachdem ob es sich um Anwendungen für einzelne Benutzer, oder Sammelbenutzer handelt, wird die Administration von Anwendungsprogrammen und berechtigten Benutzern bzw. Sammelbenutzern sehr einfach, klar, zentral oder dezentral flexibel einstellbar.
Natürlich ist diese Organisation auch dann anwendbar, wenn zur Identifikation einzelner Benutzer kein biometrisches Merkmal, sondern Benutzernamen und Passwort, beides mit der Tastatur einzugeben, angewendet werden. Durch die Verwendung von biometrischen Merkmalen wird der Anmeldevorgang für den Benutzer einfacher.

Die einem Sammelbenutzer, also einer ganzen Gruppe von einzelnen Benutzern zugeordneten Programme, sind vor allem solche, welche im Normalfall nicht ohne Schaden "einfach so" beendet werden dürfen, weil sie mit kontinuierlich andauernden Vorgängen in der Welt außerhalb der Datenverarbeitungsanlage in Echtzeit interagieren. Dieses Interagieren erfolgt über Sensoren, Stellglieder und Übertragungseinrichtungen.
Betroffene Programme sind solche, welche in Echtzeit auf äußere Anforderungen und Bedingungen reagieren und rückwirken sollen. Beispielsweise sollen sie auf die Dynamik von physikalischen Abläufen einwirken, automatisiert Messergebnisse abrufen und weiterer automatisierter oder manueller Informationsverarbeitung zuführen, automatisiert Nachrichten versenden, empfangen, oder auswerten. Etwas konkretere Beispiele sind Fertigungssteuerungen, Regelungen von Arbeitsmaschinen; Regelung von Prozessgrößen von industriellen chemischen oder metallurgischen Vorgängen; Messung, Aufzeichnung, Auswertung und Mitteilung von Lagerständen oder allgemeiner von sich verändernden physikalischen Größen, automatisiertes Veröffentlichen von aktuellen Informationen im Internet. Anwendungen die Sammelbenutzern zugeordnet sind, können aber auch Datenbereitstellung und Datenaufzeichnung beispielsweise in einem Krankenhaus sein, wobei Daten möglichst aktuell und ohne Wartezeit für Anwender entsprechend deren Rechten lesbar und erforderlichenfalls editierbar sein sollten.

## Patentansprüche

1. System für die Identifizierung und die Vergabe von Benutzungsberechtigungen in einer Datenverarbeitungseinrichtung, wobei die, die Datenverarbeitungsanlage steuernden Benutzer in der Datenverarbeitungsanlage bezüglich ihrer Zugriffsrechte gleichzeitig sowohl als individuelle Benutzer, als auch als Mitglied einer Gruppe von mehreren Benutzern registrierbar sind, **gekennzeichnet dadurch, dass** einem so registrierten Benutzer einerseits Programme zur Verfügung gestellt sind, welche einer ganzen Gruppe von Benutzern gemeinsam zur Verfügung stehen, andererseits Programme, welche zumindest in der jeweiligen Einstellung, nur diesem Benutzer ganz persönlich zur Verfügung stehen, dass die Programme entsprechend dieser Unterscheidung in zwei Gruppen zusammengefasst sind und je Gruppe durch ein eigens dafür eingerichtetes Programmmodul (E1, E2) verwaltet werden, dass jene Programme, welche individuellen Benutzern zugeordnet sind automatisch bei einem Benutzerwechsel durch das verwaltende Programmmodul (E1) beendet werden, und dass jene Programme, welche mehreren einzelnen Benutzern gemeinsam zugeordnet sind, bei einem Benutzerwechsel von ihrem verwaltenden Programmmodul (E2) nur informiert und ggf. in individuellen Einstellungen geändert werden.

2. System nach Anspruch 1, **gekennzeichnet dadurch, dass** die beiden verwaltenden Programmmodule (E1, E2) am Arbeitsplatzrechner (P) der jeweiligen Benutzer laufen.

3. System nach Anspruch 1 oder 2, **gekennzeichnet dadurch, dass** die mehreren Benutzern gemeinsam zugeordneten, durch ein gemeinsames Programmmodul (E2) verwalteten Programme, mit kontinuierlich andauernden Vorgängen außerhalb der Datenverarbeitungsanlage über Übertragungseinrichtungen und Sensoren und/oder Stellglieder interagieren.

4. System nach einem der Ansprüche 1 bis 3, **gekennzeichnet dadurch, dass** die Datenverarbeitungsanlage einen zentralen Rechner (S) und einen oder mehrere Arbeitsplatzrechner (P) umfasst, und dass die für die Identifizierung der einzelnen Benutzer erforderliche Referenzinformation in einer zentralen Datenbank (D) am zentralen Rechner (S) gespeichert ist.

5. System nach einem der vorangegangenen Ansprüche, **gekennzeichnet dadurch, dass** die Identifizierung des einzelnen Benutzer anhand des Vergleichs eines beim Anmeldevorgang eingegebenen biometrischen Merkmals mit einem gespeicherten Referenzmerkmal erfolgt.
